# EUROPEAN PATENT SPECIFICATION

(11) **EP 0 301 842 B1**
(45) Date of publication and mention of the grant of the patent: **11.01.1995**
(21) Application number: 88306935.3
(22) Date of filing: 27.07.1988
(51) Int. Cl.: G06K 11/06, G06F 3/033

(54) **Information input sheet**
Informationseingabeplatte
Plaque pour l'introduction d'information

(30) Priority: 31.07.1987 JP 192072/87
(43) Date of publication of application: 01.02.1989
(73) Proprietor: TOPPAN MOORE COMPANY, LTD., Chiyoda-ku, Tokyo 101 (JP)
(72) Inventor: Moriwaki, Masafumi, Kitatsuru-gun Yamanashi-ken (JP); Sano, Shigeaki, Fuchu-shi (JP); Tanaka, Eiichi, Koganei-shi (JP)
(74) Representative: Jones, Ian

(56) References cited:
- EP-A- 0 054 406
- US-A- 3 911 215
- US-A- 4 636 582

## Description

The present invention relates to an information input sheet.

Information input sheet are employed in systems in which handwritten characters, marks, figures and the like, are read in real time at a handwritten information input terminal, and the read-out information input terminal, and the read-out information is sent to a memory and processor apparatus such as a computer. Such systems have now been popularized for efficient handling of business matters.

Various types of such information input terminals have been proposed. Generally, handwritten information, e.g., characters are detected from the coordinate positions of the characters. In particular, a flexible conductive sheet can be placed on a resistive substrate with insulating spacers interposed therebetween. As a character is written with a pen on the conductive sheet, the pen pressure forces the conductive sheet to deform and contact the resistive substrate. Electric leads are connected to the horizontal and vertical side edges of the resistive substrate and to the conductive sheet to measure the resistance values at the pen position in the horizontal and vertical directions. The coordinate values of the pen position on the conductive sheet can be identified from the measured resistance values.

Insulators for electrically insulating the flexible conductive sheet from the resistive substrate are formed in a mesh pattern, a dot pattern or the like. It is important to select the proper dimension and interval of insulators because these factors have a great influence upon the quality of inputted image, the smoothness of writing and the like.

For example, EP-A-0 054 406 describes an information input sheet of the kind comprising a first flexible conductive sheet, a second conductive sheet overlying the first conductive sheet, and a plurality of insulators disposed between the first and second conductive sheets to define a space therebetween, the first conductive sheet being deformable, upon application of a pressure to the exposed surface thereof, at the portion where the pressure is applied so as to contact the second conductive sheet. Irrespective the types of insulator pattern, if the tip of a pen applying a pressure to the flexible conductive sheet is thicker than a certain value relative to the interval between insulators, the insulator prevents the conductive sheet from contacting the resistive substrate even if pen pressure is being applied. A conventional flexible conductive sheet is thin relative to the dimension of an insulator. Therefore, the interval between insulators is set small so as not to be sensitive to undesired pressure other than the pen pressure. Accordingly, the smaller the interval between insulators is set, the thinner the tip of an allowable pen becomes. In addition to this, if a pen of thin tip is used with a thin flexible conductive sheet, it may be located just upon the lattice of a mesh insulator or upon a dot insulator so that the insulator prevents the conductive sheet from contacting the resistive substrate. In this case, the coordinate position cannot be detected so that the input image becomes discontinuous. Further, a thin conductive sheet has insufficient elasticity required for a proper function of the conductive sheet, and a pen is likely to scratch the thin sheet at above an insulator to thus loose the smoothness of writing.

The present invention accordingly provides an information input sheet of the kind described which is characterised in that the insulators comprise dot insulators of ink material having a predetermined average width printed on the surface of the first flexible conductive sheet facing the second conductive sheet, the dot insulators are uniformly spaced apart on the surface with a predetermined average spacing, the dot insulators have substantially same as, or greater softness than, the softness of the first flexible conductive sheet, the thickness of the first conductive sheet is substantially the same as or greater than the average spacing of adjacent dot insulators and substantially the same as or greater than the average width of the dot insulators.

The invention is further described below, by way of example, with reference to the accompanying drawings, in which:
Fig. 1 is a cross section of an information input sheet according to the present invention;
Fig. 2 shows a part of the sheet shown in Fig. 1 as viewed from underneath;
Fig. 3 is a cross section of the sheet shown in Fig. 1 while a pressure is being applied by a pen;
Figs. 4A to 4D show various examples of contact between the conductive layer and the resistive layer; and
Fig. 5 is a perspective view showing an information input board using the information input sheet of this invention.

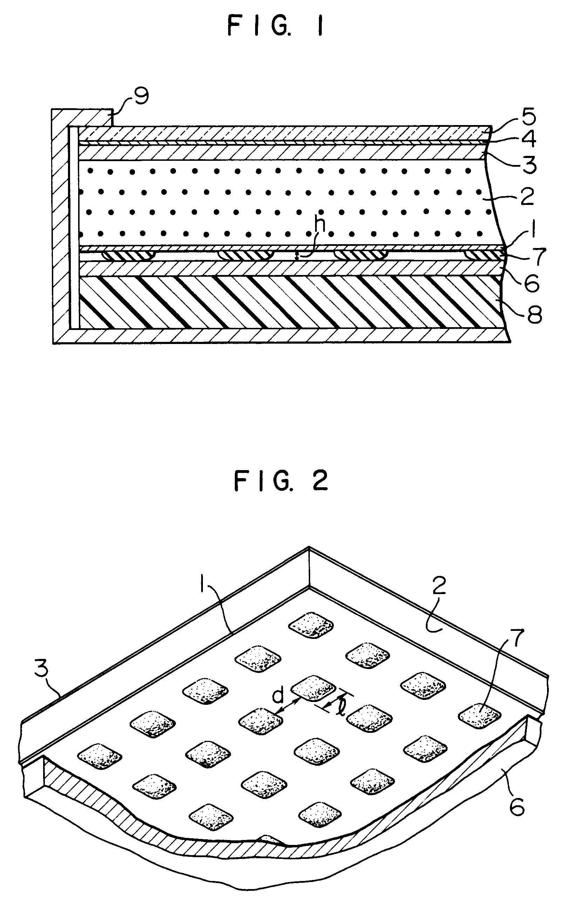

Fig. 1 is a cross section of an information input sheet according to the present invention. A flexible conductive sheet is constructed of an elastic layer 2 made of a flexible material such as polyurethane and a conductive layer 1 which is formed by coating conductive ink on the bottom surface of the elastic layer 2. A shield layer 3 is provided on the top surface of the elastic layer 2 by coating conductive ink thereon. The shield layer 3 is grounded at the ground potential point (not shown) of the information input sheet to eliminate static electricity from hand and shield external noises. There is further provided a transparent protective film 5 on the shield layer 3, the transparent protective film 5 having a Shore hardness greater than that of the elastic layer 2. Frames for title and operation entries, figures, symbols, legends and the like are printed on the bottom surface of the protective film 5. Desired information is inputted with a pen on the protective film 5 in hand-writing. The conductive layer 1, elastic layer 2, shield layer 3 and protective film 5 are laminated one upon another as shown in Fig. 1. The laminated structure as a whole is constructed such that the structure allows flexibility with deformation and restoration sufficient for a certain pen pressure. In this embodiment, insulators 7 of a dot pattern are formed on the bottom surface of the conductive layer by coating insulating ink by means of a printing technique. The insulators 7 have proper elasticity so as to be deformed and crushed upon application of a pen pressure on the sheet. Fig. 2 shows a part of the insulators 7 and the flexible laminated structure as viewed from the bottom. Each insulator 7 is generally of a trapezoid shape with its central portion gradually projecting downward. The insulators 7 are disposed at an equal pitch over the bottom surface of the conductive layer 1. The present invention is not limited to the shape shown in Fig. 2, but the shape of the insulator 7 may be a circle or other shapes.

It is preferable that the thickness of the elastic layer 2 made of polyurethane is in the range of about 0.3 to 1.0 mm, and the thickness of the protective film 5 is in the range of about 0.05 to 0.2 mm. It is preferable that the Shore hardness of the elastic layer 2 and the protective film 5 is in the range of 65° to 95°, the Shore hardness of the protective film 5 being set greater than that of the elastic layer 2. The condition that the elastic layer 2 is softer in Shore hardness than that of the protective film 5 provides improvement in the recovery and response to the pen pressure on the writing surface is improved. The condition that the protective film 5 is harder than the elastic layer 2 provides smooth pen moving in the transverse direction and light reaction to the operator. It is also preferable that the bottom side ℓ of a trapezoid of the dot type insulator 7 is in the order of 0.3 to 0.4 mm, and the height h is about 0.01 to 0.07 mm, and the pitch d between adjacent insulators is about 0.15 to 0.5 mm. The bottom side ℓ of the dot type insulator 7 is preferably greater than five times the height h.

A resistive layer 6 having a predetermined resistivity and attached on the top surface of an insulating substrate 8 made of such as bakelite or glass epoxy is disposed under the insulating layer 7. An aluminum shield box 9 grounded to the ground potential point covers the information input sheet except the pen input surface of the sheet. Instead of using the aluminum shield box 9, a conductive plate such as an aluminum plate connected to the ground potential point may be placed under the insulating substrate 8 and a box made of plastics may be used to cover the information input sheet. Such shielding prevents noises entering from the bottom surface of the information input sheet. Unless a pen is pushed against the input surface of the protective film 5, the conductive layer 1 and the resistive layer 6 are spaced apart by the insulators 7 and electrically open-circuited (insulated) as shown in Fig. 1.

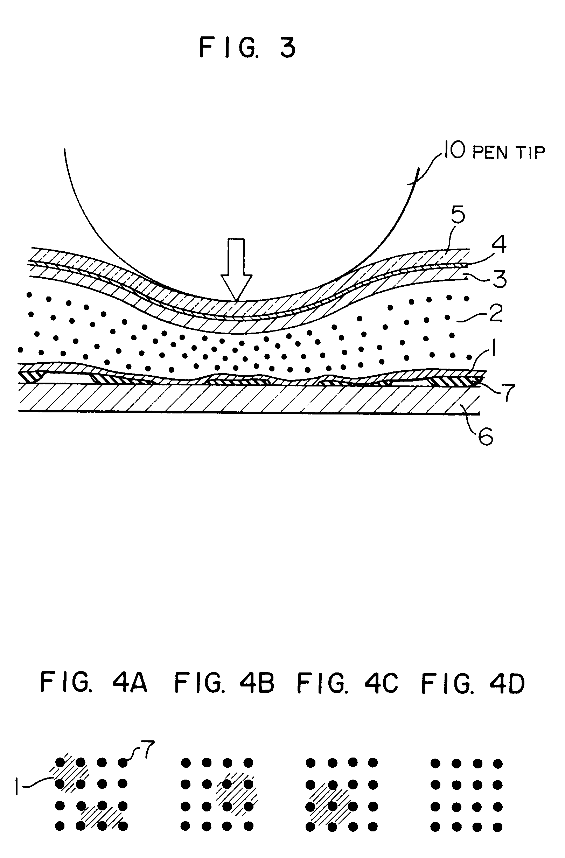

Fig. 3 is a cross section of the information input sheet constructed as above wherein a writing utensil, an input contact member or the like is pushed against the input surface of the sheet. Elements designated by identical reference numerals to those in Fig. 1 represent like elements, so the description therefor is omitted. In Fig. 3, reference numeral 10 denotes the tip of a writing utensil or pen. As seen from Fig. 3, upon application of a pen pressure by the pen tip 10 to the information input sheet in the direction indicated by an arrow, the laminated flexible structure deforms while the polyurethane elastic layer 2 deforms with some of the spaces between adjacent insulators being filled with the elastic layer 2. Therefore, the conductive layer 1 coated on the elastic layer 2 is pushed downward by the deformed elastic layer 2 and contacts a partial area of the resistive layer 6 while embracing some of the insulators within the area. Such deformation of the elastic layer 2 is realized under the condition that the thickness of the elastic layer 2 is set substantially the same as or greater than an average distance between the edges of adjacent insulators 7, and substantially the same as or greater than an average length of bottom sides ℓ of the insulators 7. Since the shield layer 3 and the protective film 5 are also flexible, the thickness of the elastic layer 2 may be considered as including the thicknesses of the shield layer 3 and the protective film 5. If the elastic layer 2 is made of a flexible layer (elastomer) containing a conductive material such as carbon, the conductive layer 1 needs not be provided. The material of the dot type insulators 7 is selected from those materials softer than that of the elastic layer 2. Preferably, the soft nature of the material is determined such that although the insulator 7 is more or less crushed upon application of a pen pressure, it deforms while being pushed into the elastic layer 2 without extending laterally. In this embodiment, since the insulator 7 is deformed and crushed upon application of a pen pressure, it helps the conductive layer 1 contact the resistive layer more broadly, which also results in an improved smoothness of writing.

With the construction as above, the conductive layer 1 can contact the resistive layer 6 upon application of a pressure by a writing utensil of any tip thickness. Such contact may occur under too high a pressure by a palm or a finger. However, assuming that the ordinary pressure applied to the sheet when a plam or a finger is placed thereon is substantially the same as a pen pressure, the conductive layer 1 cannot contact the resistive layer 6 because the pressure per unit area by the plam or finger is considerably low as compared with that by the writing utensil. Therefore, undesired input due to the touch by a palm or finger can be avoided.

Figs. 4A to 4D show the contact state between the conductive layer 1 and the resistive layer 6 upon application of a pen pressure to the information input sheet of the above embodiment according to the present invention. In Figs. 4A to 4D, a black solid circle represents the insulator 7, and a hatched portion represents a contact area between the deformed conductive layer 1 and the resistive layer 6. A difference between the contact states of Figs. 4A and 4B results from a different thickness of a pen tip. A thinner pen is used in Fig. 4A than in Fig. 4B. Two hatched portions in Fig. 4A indicate that a pen was pushed twice against the sheet at two different positions. In both the cases, it can be understood that the conductive layer 1 is deformed by a pen pressure with some of the spaces between insulators 7 being filled with the elastic layer 2 and reliably contacts the resistive layer 6 over a broad area. Fig. 4C shows the case where a pen locates just upon one of the insulators 7. Also in this case, the elastic layer 2 is deformed by a pen pressure and hence the conductive layer 1 is deformed to contact a partial area of the resistive layer 6 while embracing some of a plurality of insulators 7 within the area. Fig. 4D shows the case where an insufficient pen pressure is applied or a palm or finger touches the sheet. In this case, the conductive layer 1 and the resistive layer 6 are not allowed to contact each other.

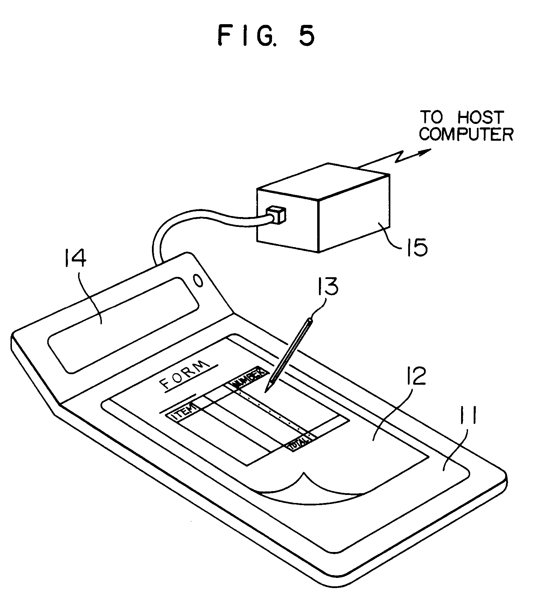

Fig. 5 is a perspective view of an information input board of a handwritten information input terminal to which the information input sheet of this invention is applicable.

The information input sheet shown in Fig. 1 is represented by reference numeral 11 and is disposed on the board with the protective film 5 facing upward. An entry form sheet 12, various types of which may be provided for different users, is placed on the information input sheet 11. Necessary information is depicted in the entry form sheet 12 with a pen 13 so that the information is supplied to the information input sheet in the form of pen pressure. An input information display 14 may use, e.g., a liquid crystal display panel on which handwritten information such as characters and symbols are displayed. The information input board is connected to a control unit 15 via a cable. The control unit 15 can recognize handwritten information using a built-in CPU and store the data in a memory, and supply power to the information input sheet. The control unit 15 is coupled to a host computer (not shown) to process the inputted information.

## Claims

1. An information input sheet comprising:
a first flexible conductive sheet (1-5);
a second conductive sheet (6,8) overlying the first conductive sheet; and
a plurality of insulators (7) disposed between the first and second conductive sheets to define a space therebetween, the first conductive sheet being deformable, upon application of a pressure to the exposed surface thereof at the portion where the pressure is applied so as to contact the second conductive sheet, characterised in that the insulators comprise dot insulators (7) of ink material having a predetermined average width (2) printed on the surface of the first flexible conductive sheet (1-5) facing the second conductive sheet (6,8), the dot insulators are uniformly spaced apart on the surface with a predetermined average spacing (d), the dot insulators have substantially same as, or greater softness than, the softness of the first flexible conductive sheet, the thickness of the first conductive sheet is substantially the same as or greater than the average spacing (d) of adjacent dot insulators and substantially the same as or greater than the average width (c) of the dot insulators.

2. An information input sheet according to claim 1 wherein the first conductive sheet (1-5) comprises a layer (2) of flexible material, and a layer (1) of conductive material for contacting the second conductive sheet (6,8).

3. An information input sheet according to claim 2 having a third conductive layer (3) overlying the layer (2) of flexible material for electrically shielding the second conductive layer (6,8).

4. An information input sheet according to claim 3 having a print sheet (4) covering the top surface of the third conductive layer (3) and a protective sheet (5) covering the top surface of the print sheet.

5. An information input sheet according to claim 4 wherein the thicknesses of the layer (2) of flexible material and of the protective sheet (5) are in the range of 0.3 to 1.0 mm and in the range of 0.05 to 0.5 mm, respectively.

6. An information input sheet according to claim 5 wherein the Shore hardness of the layer (2) of flexible material and the protective sheet (5) is in the range of 65° to 95°, and the Shore hardness of the protective sheet is greater than that of the layer of flexible material.

7. An information input sheet according to any preceding claim wherein the second conductive sheet (6,8 comprises a resistive layer (6).

8. An information input sheet according to any preceding claim wherein the second conductive sheet (6,8) comprises a substrate (8).

9. An information input sheet according to any preceding claim wherein the average spacing (d) between adjacent insulators is substantially the same as the average width (1) of the insulators.

## Patentansprüche

1. Ein Informationseingabeblatt,
mit einem ersten elastischem leitfähigen Blatt (1-5); einem zweiten leitfähigen Blatt (6,8), welches das erste leitfähige bzw. leitende Blatt überzieht; und
einer Vielzahl an Isolatoren (7), welche zwischen dem ersten und dem zweiten leitenden Blatt angeordnet sind, um einen Zwischenraum zwischen diesen festzulegen, wobei das erste leitfähige Blatt verformbar ist, und bei Aufbringen eines Druckes auf dessen exponierte Oberfläche der Abschnitt, auf welchen der Druck aufgebracht wird, dazu gebracht wird, das zweite leitfähige Blatt zu kontaktieren,
**dadurch gekennzeichnet**,
daß die Isolatoren Punktisolatoren (7) aus Tuschematerial mit einer bestimmten durchschnittlichen Breite (2) aufweisen, welche auf dem ersten elastischen leitenden Blatt (1-5) gegenüber dem zweiten leitenden Blatt (6, 8) aufgedruckt sind, wobei die Punktisolatoren gleichförmig voneinander mit einem bestimmten durchschnittlichen Abstand (d) beabstandet sind, die Punktisolatoren eine im wesentlichen gleiche oder größere Weichheit besitzen gegenüber der Weichheit des ersten elastischen leitenden Blattes, die Dicke des ersten leitfähigen Blattes im wesentlichen gleichgroß oder größer als der durchschnittliche Abstand (d) nebeneinanderliegender Punktisolatoren und im wesentlichen gleichgroß oder größer als die durchschnittliche Breite (c) der Punktisolatoren ist.

2. Informationseingabeblatt nach Anspruch 1,
bei dem
die erste leitende Schicht (1-5) eine Schicht (2) aus elastischem Material, und eine Schicht (1) aus leitendem Material zur Kontaktierung des zweiten leitenden Blattes (6, 8) aufweist.

3. Informationseingabeblatt nach Anspruch 2,
bei dem,
eine dritte leitende Schicht (3) vorgesehen ist, welche die Schicht (2) aus elastischem Material überzieht, um die zweite leitende Schicht (6, 8) elektrisch abzuschirmen.

4. Informationseingabeblatt nach Anspruch 3,
bei dem ein Druckblatt (4) vorgesehen ist, welches die obere Fläche der dritten leitenden Schicht (3) überdeckt, und ein Schutzblatt (5), welches die obere Fläche des Druckblattes bedeckt.

5. Informationseingabeblatt nach Anspruch 4,
bei dem die Dicken der Schicht (2) aus elastischem Material und des Schutzblattes (5) im Bereich von 0,3 bis 1,0 mm bzw. im Bereich von 0,05 bis 0,5 mm liegen.

6. Informationseingabeblatt nach Anspruch 5,
bei dem die Shorehärte der Schicht (2) aus elastischem Material und des Schutzblattes (5) im Bereich von 65° bis 95° liegt, und die Shorehärte des Schutzblattes größer ist als die der Schicht aus elastischem Material.

7. Informationseingabeblatt nach einem vorangegangen Anspruch,
bei dem das zweite leitfähige Blatt (6, 8) eine Widerstandsschicht (6) aufweist.

8. Informationseingabeblatt nach jedem der vorangegangen Ansprüche
bei dem das zweite leitfähige Blatt (6, 8) ein Substrat (8) aufweist.

9. Informationseingabeblatt nach einem der vorangegangenen Ansprüche,
bei dem der durchschnittliche Abstand (d) zwischen den nebeneinanderliegenden Isolatoren im wesentlichen derselbe wie die durchschnittliche Breite (1) der Isolatoren ist.

## Revendications

1. Feuille d'entrée d'informations comportant :
une première feuille conductrice souple (1 - 5),
une seconde feuille conductrice (6, 8) recouvrant la première feuille conductrice, et
plusieurs isolateurs (7) agencés entre la première et la seconde feuilles conductrices pour définir un espace entre celles-ci, la première feuille conductrice pouvant être déformée, par application d'une pression sur sa surface exposée, au niveau de la partie où la pression est appliquée de telle sorte qu'elle vienne en contact avec la seconde feuille conductrice, caractérisée en ce que les isolateurs sont constitués d'isolateurs (7) formant points constitués d'un matériau formant encre ayant une largeur moyenne prédéterminée (ℓ) imprimés sur la surface de la première feuille conductrice souple (1 - 5) située en vis-à-vis de la seconde feuille conductrice (6, 8), les isolateurs formant points sont écartés de manière uniforme sur la surface en ayant un écartement moyen prédéterminé (d), les isolateurs formant points ont une douceur pratiquement égale ou supérieure à la douceur de la première feuille conductrice souple, l'épaisseur de la première feuille conductrice est pratiquement la même ou plus grande que l'écartement moyen (d) d'isolateurs formant points adjacents et pratiquement la même ou plus grande que la largeur moyenne (ℓ) des isolateurs formant point.

2. Feuille d'entrée d'informations selon la revendication 1, dans laquelle la première feuille conductrice (1 à 5) comporte une couche (2) constituée de matériau souple, et une couche (1) constituée de matériau conducteur destinée à venir en contact avec la seconde feuille conductrice (6, 8).

3. Feuille d'entrée d'informations selon la revendication 2, ayant une troisième couche conductrice (3) recouvrant la couche (2) constituée de matériau souple pour protéger électriquement la deuxième feuille conductrice (6, 8).

4. Feuille d'entrée d'informations selon la revendication 3, ayant une feuille imprimée (4) recouvrant la surface supérieure de la troisième couche conductrice (3) et une feuille de protection (5) recouvrant la surface supérieure de la feuille imprimée.

5. Feuille d'entrée d'informations selon la revendication 4, dans laquelle les épaisseurs de la couche (2) constituée de matériau souple et de la feuille protectrice (5) sont situées dans la plage allant de 0,3 à 1,0 mm et dans la plage de 0,05 à 0,5 mm, respectivement.

6. Feuille d'entrée d'informations selon la revendication 5, dans laquelle la dureté Shore de la couche (2) constituée de matériau souple et de la feuille protectrice (5) est située dans la plage allant de 65° à 95°, et la dureté Shore de la feuille protectrice est plus grande que celle de la couche constituée de matériau souple.

7. Feuille d'entrée d'informations selon l'une quelconque des revendications précédentes, dans laquelle la seconde feuille conductrice (6, 8) comporte une couche résistive (6).

8. Feuille d'entrée d'informations selon l'une quelconque des revendications précédentes, dans laquelle la seconde feuille conductrice (6, 8) comporte un substrat (8).

9. Feuille d'entrée d'informations selon l'une quelconque des revendications précédentes, dans laquelle l'écartement moyen (d) existant entre des isolateurs adjacents est pratiquement le même que la largeur moyenne (ℓ) des isolateurs.
